# EUROPEAN PATENT APPLICATION

(11) **EP 1 785 553 A2**
(43) Date of publication of application: **16.05.2007**
(21) Application number: 06425743.9
(22) Date of filing: 27.10.2006
(51) Int. Cl.: E04H 7/18

(54) **Pre-cast concrete tank for storing wine or other liquids, with temperature-regulating system**

(30) Priority: 11.11.2005 IT PD20050329
(71) Applicant: Nico Velo S.p.A., 35014 Fontaniva (PD) (IT)
(72) Inventor: Velo, Paolo, 35014 Fontaniva (PD) (IT)
(74) Representative: Vinci, Marcello

(57) **Abstract**

The invention is a new precast concrete tank for storing wine or other liquids, comprising one or more pipes (T) for circulation of the cooling and/or heating fluid, buried in the concrete of one or more side walls (L, L1) and/or bottom wall (F) and/or top covering wall (C) of the tank itself. Each one of said pipes (T) comprises at least one inlet end (A) for the introduction and at least one outlet end for the outflow of said heating/cooling fluid for the direct or indirect connection to the heating and/or cooling systems.

## Description

The present patent relates to tanks for storing liquids and in particular it concerns a new precast concrete tank for storing wine or other liquids, equipped with temperature-regulating system.

Precast tanks made of stainless steel or concrete, for storing wine, oil or other liquids are known.

In particular, the use of temperature-controlled tanks is known, which are used mainly for storing wine.

In fact, the influence of temperature on the chemical-physical processes involved in wine production is known.

For example, some fermentation stages need temperatures not exceeding 20 °C, while it is necessary to keep the temperature above 10 °C in order not to interrupt the biological activity of yeasts.

Furthermore, it is known that every type of wine requires a specific storage temperature, needed to avoid altering the organoleptic properties of the wine and to enhance its taste and aroma.

Inside said temperature-controlled tanks, the temperature is checked and regulated independently of the conditions of the external environment.

At present, tanks are known whose temperature is regulated by means of heat exchangers positioned inside the tank itself, that is, immersed in the liquid contained therein and in direct contact with it.

Said heat exchangers, for example, are constituted by coils connected to cooling or heating systems, containing cold or hot water.

The heat exchange with the liquid stored in the tank therefore takes place through direct contact between said stored liquid and the external walls of said coils.

Alternatively, to provide only for heating wine, electric resistances immersed in the liquid contained in the tank can be used.

The use of external heat exchangers is also known, said heat exchangers consisting of pairs of plates or pipes in contact with each other, within which the liquid whose temperature must be regulated and the system water flow in opposite directions.

Insulated stainless steel containers are also known, that is, containers with a double wall inside which the cooling liquid flows.

There is also another procedure, according to which the tank temperature is regulated through the regulation of temperature in the room where the tank is positioned.

This solution, however, leads to high operating costs, since in this case it is necessary to cool and/or heat the entire room that is usually rather large.

All the known tanks are provided with one ore more side openings, positioned near the bottom, at the level of which there are special taps for drawing out the liquid contained therein, and with one or more upper openings for the introduction of the liquid in the tank, with the relative tight doors.

The subject of the present patent is a new precast concrete tank for storing wine or other liquids.

The main aim of the present invention is to make it possible to control and regulate the temperature of the wine or other liquid contained in the tank.

Another aim of the present invention is to ensure that the temperature inside the tank remains constant even if the temperature of the external environment changes.

A further aim of the present invention is to ensure the preservation of the wine at the correct temperature, even in adverse climate, for example excessively hot or humid climate.

Another aim of the present invention is to ensure the homogeneous distribution of heat inside the tank.

A further aim of the present invention is to provide a system that can be used both for cooling and heating the liquid contained in the tank.

These and other direct and complementary aims have been achieved through the construction of the new precast concrete tank for storing wine or other liquids, equipped with its own temperature-regulating system carried out with circuits buried in the side and/or bottom and/or top covering walls.

The new tank is constituted, as to its main components, by one ore more side walls, at least one bottom wall and at least one top covering wall, made of concrete and in which the pipes are buried, preferably arranged in a coil or spiral pattern, the system water for heating/cooling the walls flowing inside said pipes.

The temperature of the liquid contained in the tank, in contact with the walls that are cooled and/or heated due to the passage of said water system within the pipes, is thus regulated according to the special conditions to be met for processing or preserving the liquid itself.

The side, bottom and covering walls are preferably carried out individually.

A first step in the construction of each wall requires the preparation of a metal reinforcement comprising a plurality of main reinforcing rods arranged so as to form a grid, to which the system water pipes are fixed.

Said reinforcement prepared for each wall also comprises a plurality of orthogonal and/or parallel perimetric reinforcing rods that protrude from the concrete surface in order to enable the connection of the walls and, consequently, the assembly of the tank.

After positioning, said pipes and the corresponding reinforcement of each wall are buried in the concrete casting, with at least the two ends of each pipe protruding therefrom for the successive direct or indirect connection to the cooling and/or heating systems through main or secondary manifolds.

The new tank is preferably cylindrical or parallelepiped in shape, with square or rectangular base, comprising a bottom wall, four side vertical walls and a top covering wall.

At least one of said side walls also comprises at least one opening, at the level of which there is a tap for drawing the liquid contained in the tank, and wherein said opening is positioned near the lower edge of the side wall.

Said covering wall, analogously to the known tanks, is provided with a further opening for introducing the liquid in the tank, equipped with the relevant tight door.

Furthermore, according to the invention, the new tank is carried out in a single unit, using special moulds and keeping the pipes of each wall independent of those of the other walls.

The characteristics of the new tank will be highlighted in greater detail in the following description, with reference to the enclosed drawings, attached as examples without limitation.
Figure 1 shows one of the side walls that make up the new tank, with pipes for circulation of the system water.
Figure 1a shows the construction step of the side wall provided with an opening for drawing the stored liquid, before the concrete is cast, wherein the reinforcing rods and the pipes can be seen.
Figure 1b shows the bottom wall.
Figure 2 shows the rear upper part of the new tank once the assembly has been completed.

The new tank is preferably parallelepiped in shape and comprises at least one bottom wall (F), four side vertical walls (L, L1) and a top covering wall (C), all made of reinforced concrete.

The construction of each one of said walls (L, L1, F, C) comprises a first step for the preparation of a metal reinforcement comprising a plurality of reinforcing rods (M) arranged so as to form a grid or network, to which the system water pipes (T) can be fixed.

Said reinforcement also comprises a plurality of orthogonal and/or parallel perimetric reinforcing rods that protrude from the concrete surface in order to permit the successive connection of the walls (L, L1, F, C).

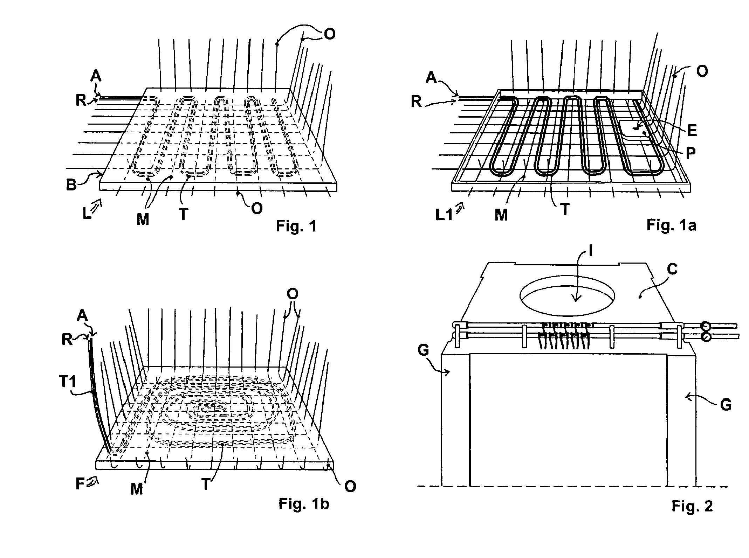

Said pipes (T) are positioned above or below or between one or more of said grids and arranged homogeneously in the corresponding wall, in a coil pattern, as shown in Figures 1 and la, or in a spiral pattern, as shown in Figure 1b.

In particular, the pipes (T) of each wall (L, L1, F, C) should be preferably independent, that is, not directly connected to the pipes (T) incorporated in the other walls (L, L1, F, C).

Concrete is cast after positioning said pipes (T).

The two ends (A) and (R) of each pipe (T), one of which serves as inlet (A) and the other as outlet (R) for the system water, are arranged in such a way as to protrude from the corresponding wall (L, L1, F, C), in order to allow the successive connection to the cooling and/or heating systems.

In detail, said ends (A) and (R) of the pipes in the side walls (L, L1) preferably protrude from an edge (B) of the wall.

In the bottom (F), on the other hand, said pipes (T) protrude for a given section (T1) from the upper surface of the wall (F) and, in particular, from the area near one of the corners.

During the assembly of the new temperature-controlled tank, said side walls (L, L1) are arranged so that the edges (B) of said side walls (L, L1) from which said ends (A) and (R) of each pipe (T) protrude are preferably facing upwards.

The protruding sections (T1) of the pipes (T) of the bottom wall (F), on the other hand, are positioned vertically, parallel to the edges of the side walls (L).

Said side walls (L, L1), said bottom wall (F) and said top covering wall (C) are then made integral to one another by means of joints carried out with concrete castings.

Said protruding sections (T1) of the pipes (T) of the bottom wall (F) are thus buried in the concrete of the vertical joint between two side walls (L), so that the ends (A) and (R) of said pipes (T) protrude upwards.

In this way, the ends (A, R) of the pipes (T) of the four side walls (L, L1), of the bottom wall (F) and of the covering wall (C) are positioned in the upper part of the new tank and, successively, the connection of the pipes (T) to the heating and/or cooling systems can be carried out more easily, using a limited quantity of pipes and fittings.

In particular, it is preferable to group the ends (A, R) of all the pipes (T) so that they protrude from points that are near one another, in order to further facilitate connection to the heating and/or cooling systems.

At least one of said side walls (L1) also comprises at least one opening (E), at the level of which there is a tap for drawing the liquid contained in the tank, and wherein said opening (E) is positioned near the lower edge of the side wall (L1).

Said opening (E) is preferably obtained on a plate (P) positioned on the main reinforcing rods (F) of said side wall (L1) before the concrete casting step, as shown in Figure 1a.

Said covering wall (C), analogously to the known tanks, is provided with a further opening (I) for introducing the liquid in the tank, said opening being provided with the relevant tight door.

Said pipes (T) are also directly or indirectly connected to pressure gauges, thermometers, valves and any other instrument that may be useful for the correct regulation of the temperature in the tank.

The inside of the tanks is vitrified, said vitrification being carried out with inert, non-toxic resins, without solvents, so as to ensure the correct preservation of the organoleptic characteristics of the wine or of any other liquid stored in the tank.

Therefore, with reference to the above description and the attached drawings, the following claims are expressed.

## Claims

1. New precast concrete tank for storing wine or other liquids, **characterized in that** it comprises one or more pipes (T) for circulation of the cooling and/or heating fluid, buried in the concrete of one or more side walls (L, L1) and/or bottom wall (F) and/or top covering wall (C) of the tank itself.

2. Temperature-controlled tank according to claim 1, **characterized in that** each of said one or more side walls (L, L1) and/or said bottom wall (F) and/or said top covering wall (C) comprises a metal reinforcement comprising in turn a plurality of main reinforcing rods (M) arranged in such a way as to form a substantially plane grid.

3. Temperature-controlled tank according to claims 1, 2, **characterized in that** said pipes (T) are distributed homogeneously on said walls (L, L1, F, D).

4. Temperature-controlled tank according to claims 1, 2, 3, **characterized in that** said pipes (T) of each wall (L, L1, F, C) are independent of the pipes (T) of the other walls (L, L1, F, C).

5. Temperature-controlled tank according to the previous claims, **characterized in that** each one of said pipes (T) comprises at least one inlet end (A) for the introduction of the heating/cooling fluid and at least one outlet end for the outflow of said heating/cooling fluid, wherein said ends (A) and (R) protrude from the corresponding wall (L, L1, F, C) for the direct or indirect connection to the heating and/or cooling systems.

6. Temperature-controlled tank according to the previous claims, **characterized in that** said side walls (L, L1) are assembled and joined to each other by means of joints obtained from cast concrete, and wherein said ends (A) and (R) of each pipe (T) protrude from the upper edge (B) of the relevant wall (L, L1).

7. Temperature-controlled tank according to the previous claims, **characterized in that** said pipes (T) of the bottom wall (F) protrude from its upper surface, near a corner, and wherein said pipes (T) are buried in the concrete of the vertical joint between the two side walls (L, L1), so that the relative ends (A) and (R) protrude from the upper part of the tank.

8. Temperature-controlled tank according to the previous claims, **characterized in that** said ends (A, R) of all said pipes (T) are grouped in such a way as to protrude from points that are near one another.

9. Temperature-controlled tank according to the previous claims, **characterized in that** at least one of said side walls (L1) comprises at least one opening (E), at the level of which there is a tap or another device for drawing the liquid contained in the tank, and wherein said opening (E) is positioned near the lower edge of the side wall (L1).

10. Temperature-controlled tank according to the previous claims, **characterized in that** said covering wall (C) comprises at least one opening (I) for the introduction of the liquid to be stored in the tank.

11. Temperature-controlled tank according to the previous claims, **characterized in that** it is substantially parallelepiped in shape.
